# EUROPEAN PATENT APPLICATION

(11) **EP 4 131 630 A1**
(43) Date of publication of application: **08.02.2023**
(21) Application number: 21796799.1
(22) Date of filing: 22.04.2021
(51) Int. Cl.: H01M 50/505, H02G 5/06

(54) **COPPER BAR PROTECTION STRUCTURE, BATTERY PACK, AND ELECTRIC VEHICLE**

(30) Priority: 27.04.2020 CN 202010345267
(71) Applicant: BYD Company Limited, Shenzhen, Guangdong 518118 (CN)
(72) Inventor: ZHAO, Xiangfeng, Shenzhen, Guangdong 518118 (CN); GUO, Kun, Shenzhen, Guangdong 518118 (CN); TAO, Naishu, Shenzhen, Guangdong 518118 (CN)
(74) Representative: Hoffmann Eitle
(86) International application number: PCT/CN2021/089022
(87) International publication number: WO 2021/218775

(57) **Abstract**

A copper bar protection structure (10) includes an upper housing (11) and a lower housing (12) that are engaged with each other. A receiving groove (14) is provided on each of engagement surfaces (15) of the upper housing (11) and the lower housing (12). The two receiving grooves (14) are combined into a copper bar accommodating space. A phase change material layer (30) is laid on an inner wall (13) of the receiving groove (14). The copper bar (20) is wrapped by the phase change material layer (30) when the copper bar accommodating space accommodates a copper bar (20).

## Description

### CROSS-REFERENCE TO RELATED APPLICATIONS

The present disclosure claims priority to Chinese Patent Application No. 202010345267.X, filed by BYD Co., Ltd. on April 27, 2020 and entitled "COPPER BAR PROTECTION STRUCTURE, BATTERY PACK, AND ELECTRIC VEHICLE".

### FIELD

The present disclosure relates to the field of vehicles, and more specifically, to a copper bar protection structure, a battery pack, and an electric vehicle.

### BACKGROUND

As a power component of an electric vehicle, the battery pack mainly operates by charging and discharging multiple battery packs connected internally, and different battery packs are electrically connected through a copper bar. In order to protect the copper bar, the conventional process is to add a polyimide (PI) film to the outer surface of the copper bar to play the role of insulation protection. However, during the long-term use of the battery pack, it is considered that under various operating conditions, the vibration of the electric vehicle will cause the wear and damage of the PI film on the outer surface of the copper bar, resulting in a risk of electric leakage.

### SUMMARY

An object of the present disclosure is to provide a copper bar protection structure, in which a copper bar accommodating space is formed through the design of upper and lower housings that are engaged, and a phase change material layer is laid on an inner wall of the copper bar accommodating space, so that the formed copper bar protection structure can protect the copper bar more effectively, thereby avoiding the risk of electric leakage caused by vibration and wear.

In a first aspect, an embodiment of the present disclosure provides a copper bar protection structure, including an upper housing and a lower housing that are engaged with each other. A receiving groove is provided on each of engagement surfaces of the upper housing and the lower housing. The two receiving grooves are combined into a copper bar accommodating space. A phase change material layer is laid on an inner wall of the receiving groove. When the copper bar accommodating space accommodates a copper bar, the copper bar is wrapped by the phase change material layer. The accommodating space formed by the upper housing and the lower housing can form physical protection against the bumping of the copper bar. On the one hand, the design of the phase change material layer can buffer the wear between the upper and the lower housings and the copper bar. On the other hand, the phase change material layer can absorb the heat of the copper bar and reduce the temperature of the copper bar.

In an embodiment, a thickness of the phase change material layer ranges from 1 mm to 2 mm. The phase change material layer with the thickness ranging from 1 mm to 2 mm not only can satisfy requirements of buffering wear, but also facilitates the miniaturized design of the structure.

In an embodiment, the upper housing includes multiple fixing plates, and fixing through holes are provided on the fixing plates. The design of the fixing plate and the fixing through hole is convenient for the mounting and fixing of the copper bar protection structure, and avoids the collision between the copper bar protection structure and other components on the battery pack caused by an operating condition of vibration.

In an embodiment, a metal protective sleeve is arranged in each of the fixing through holes. The metal protective sleeve functions to protect the fixing through hole. In the embodiment, in consideration of the lightweight design of the product, materials of the upper housing and the lower housing are preferably plastic, such as PPO (polyphenylene ether b). The copper bar protection structure is mounted by screws. Under the operating condition of vibration, the screws will cause serious wear to the hole wall of the fixing through hole and lead to the increase in the hole diameter and the risk of screw slippage in extreme cases. Therefore, a metal protective sleeve is designed on the hole wall of the fixing through hole, so as to ensure that the fixing through hole is not deformed due to wear.

In an embodiment, the fixing plate includes a first fixing plate and a second fixing plate. A plate surface of the first fixing plate is parallel to the engagement surface, and a plate surface of the second fixing plate is perpendicular to the engagement surface. The plate surface of the first fixing plate is perpendicular to the plate surface of the second fixing plate, which can ensure that forces withstood by the copper bar protection structure may be distributed in multiple directions, so that the copper bar protection structure can be fixed more stably.

In an embodiment, two first fixing plates are arranged, and the two first fixing plates are symmetrically arranged on two sides of the copper bar accommodating space. The two first fixing plates symmetrically distributed on two sides of the copper bar accommodating space can allow the copper bar protection structure to withstand the forces more uniformly.

In an embodiment, the copper bar is divided into multiple segments in an extending direction of the copper bar, and at least one fixing plate is arranged on the upper housing corresponding to each of the segments of the copper bar. In the embodiment, due to the need for space connection, the copper bar needs to be bent, which will cause the copper bar to be divided into multiple segments in the extending direction of the copper bar, and the corresponding upper housing and lower housing are also divided into multiple segments. At least one fixing plate is arranged on the upper housing corresponding to different extended segments of the copper bar, which can help fixing and mounting at different extended segments and ensure the uniform distribution of the forces during the mounting.

In an embodiment, when the first housing and the second housing are engaged as a whole, a cross-section perpendicular to the engagement surface is a rectangle. Since the cross-section of the copper bar is generally rectangular, the copper bar protection structure with the hollow rectangular cross-section also realizes the miniaturized design of the structure while protecting the copper bar, which avoids generating a redundant structure.

In a second aspect, the present disclosure provides a battery pack, including multiple battery modules, a liquid cooling plate, a copper bar, and the copper bar protection structure according to any of the above. The multiple battery packs are connected through the copper bar, the copper bar is wrapped by the copper bar protection structure, and the copper bar protection structure is attached to the liquid cooling plate. The copper bar in the battery pack of the embodiment is wrapped by the copper bar protection structure, so as to avoid direct contact and collision with the liquid cooling plate. In addition, the phase change material layer in the copper bar protection structure can absorb heat during operation of the copper bar and transfer the heat to the cooling liquid plate, thereby achieving the effect of temperature control.

In a third aspect, the present disclosure provides an electric vehicle, including the above battery pack. In the electric vehicle in the embodiment, the copper bar of the battery pack of the electric vehicle is wrapped by the copper bar protection structure, which improves the mounting stability of the copper bar, avoids risks such as electric leakage of the copper bar, and enhances the safety performance of the electric vehicle.

In the copper bar protection structure of the embodiment of the present disclosure, the copper bar accommodating space is formed through the design of the receiving grooves of the upper housing and the lower housing that are engaged. In addition, the phase change material layer is laid on the inner wall of the receiving groove to realize the wrapping of the copper bar and avoid the risk of electric leakage of the copper bar caused by collision during use.

### BRIEF DESCRIPTION OF THE DRAWINGS

FIG. 1 is a schematic structural diagram of a copper bar protection structure according to an embodiment of the present disclosure.
FIG. 2 is a cross-sectional view taken along line A-A in FIG. 1.
FIG. 3 is an exploded view of the cross-sectional view in FIG. 2.
FIG. 4 is an exploded view of a copper bar protection structure according to an embodiment of the present disclosure.
FIG. 5 is a partial enlarged view of part B in FIG. 1.
FIG. 6 is a schematic structural diagram of a battery pack according to an embodiment of the present disclosure.

### DETAILED DESCRIPTION

The specific implementations of the present disclosure are clearly described below with reference to the accompanying drawings.

A copper bar protection structure in the embodiment of the present disclosure can be used in a battery pack of an electric vehicle, which functions to connect different battery modules in the battery pack to realize electrical connection between the battery modules.

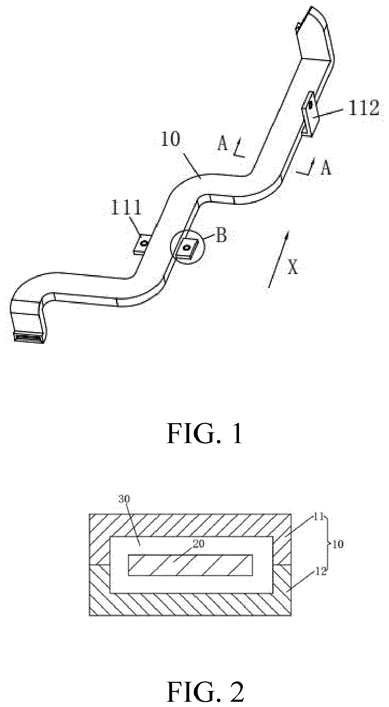

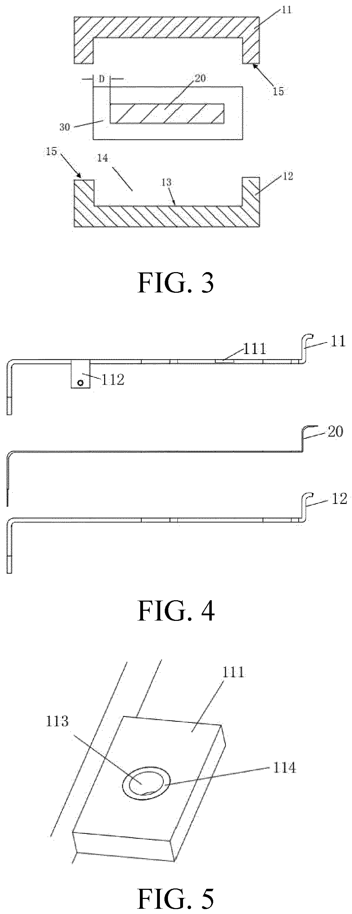

Refer to FIG. 1 to FIG. 4 together. FIG. 1 is a schematic structural diagram of a copper bar protection structure according to an embodiment of the present disclosure. FIG. 2 is a cross-sectional view of the copper bar protection structure taken along line A-A. FIG. 3 is an exploded view of the cross-sectional view in FIG. 2. FIG. 4 is an exploded view of a copper bar protection structure.

A copper bar protection structure 10 in the embodiment includes an upper housing 11 and a lower housing 12. A receiving groove 14 is provided on each of engagement surfaces 15 of the upper housing 11 and the lower housing 12. When the upper housing 11 is engaged with the lower housing 12, the two opposite receiving grooves 14 are combined into a copper bar accommodating space. A phase change material layer 30 is laid on an inner wall 13 of each of the receiving grooves 14. When a copper bar 20 is placed in the copper bar accommodating space, the copper bar 20 is wrapped by the phase change material layer 30. During specific implementation, in consideration of the mounting strength and lightweight design, the upper housing 11 and the lower housing 12 are preferably plastic profiles, for example, made of PPO (polyphenylene ether b), which not only has a certain strength, but also has a lower density than ordinary metals. It should be noted that shapes of the upper housing 11 and the lower housing 12 are designed according to the shape and the extending direction of the copper bar 20, as long as the copper bar 20 can be protected, which is not limited to the shape structure in the figure.

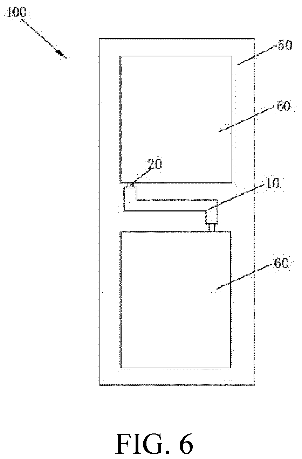

The phase change material layer 30 is laid on the inner wall 13 of the receiving groove 14 in many manners. In an embodiment, one manner includes operations of: first placing the copper bar 20 in any receiving groove 14 of the upper housing 11 or the lower housing 12, then engaging the upper housing 11 with the lower housing 12 to form a complete housing, and then injecting the phase change material into the housing from openings at a head and a tail, so that the phase change material can be filled between the copper bar 20 and the inner wall 13 of the housing, and then dried to form the phase change material layer 30. The adopted manner can ensure that the copper bar 20 is tightly wrapped by the phase change material layer 30, so as to avoid the collision between the copper bar 20 and the inner wall 13 of the housing. In addition, the phase change material layer 30 functions to absorb and store heat. When the operating temperature of the copper bar 20 increases sharply, the phase change material layer 30 will absorb part of heat, and then transfer the heat to outside of the upper housing 11 and the lower housing 12 to be dissipated. In the actual assembly process, as shown in FIG. 6, in order to exert the heat dissipation function of the phase change material layer 30 more effectively, the copper bar protection structure 10 may be mounted on the liquid cooling plate 50 of the battery pack 100, and the heat absorbed and stored by the phase change material layer 30 is taken away by the liquid cooling plate 50, thereby buffering the sharp rise of the temperature of the copper bar 20.

In an embodiment, as shown in FIG. 3, a thickness D of the phase change material layer 30 ranges from 1 mm to 2 mm. The phase change material layer 30 with the thickness D ranging from 1 mm to 2 mm not only can satisfy requirements of buffering wear, but also facilitates the miniaturized design of the structure.

In an embodiment, as shown in FIG. 2 and FIG. 3, when the first housing 11 and the second housing 12 are engaged as a whole, a shape of a cross-section perpendicular to the engagement surface 15 is a hollow rectangle. Since the cross-section of the copper bar 20 is generally rectangular, the copper bar protection structure 10 with the hollow rectangular cross-section can protect the copper bar 20 in a wrap-around manner, and the miniaturized design of the product is also realized.

In the conventional design, a head end and a tail end of the copper bar are connected with different battery packs, that is, the mounting and fixing of the copper bar only depend on the connection between the head end and the tail end. In the present disclosure, as shown in FIG. 1 and FIG. 5, the upper housing 11 of the copper bar protection structure 10 further includes a first fixing plate 111 and a second fixing plate 112 having fixing through holes 113 formed. The fixing plates (the first fixing plate 111 and the second fixing plate 112) are designed to position and mount the copper bar protection structure 10 and other components on the battery pack. As shown in FIG. 6, the copper bar protection structure 10 is mounted on the liquid cooling plate 50. In this case, it is only necessary to form several threaded holes (not shown) corresponding to the fixing through holes (not shown) on the liquid cooling plate 50. During the mounting, on the one hand, the copper bar 20 is connected with the battery pack 60, and on the other hand, screws are arranged to extend through the fixing through holes to be connected with the threaded holes, so as to realize the mounting of the copper bar protection structure 10 on the liquid cooling plate 50. The copper bar protection structure 10 that is positioned and mounted by screws has better mounting stability, and the connection between the copper bar 20 and the battery pack 60 will not be affected when the entire battery pack 100 is in an operating condition of vibration.

In an embodiment, as shown in FIG. 5, a metal protective sleeve 114 is arranged in each of the fixing through holes 113. The metal protective sleeve 114 functions to protect an inner wall of the fixing through hole 113. In the embodiment, in consideration of the lightweight design of the product, materials of the upper housing 11 and the lower housing 12 are preferably plastic. The copper bar protection structure 10 is mounted by screws. Under the operating condition of vibration, the screws will cause serious wear to the hole wall of the fixing through hole 113 and lead to the increase in the hole diameter and the risk of screw slippage in extreme cases. Therefore, a metal protective sleeve 114 is designed on the hole wall of the fixing through hole 113, so as to ensure that the fixing through hole 113 is not deformed due to wear.

In an embodiment, as shown in FIG. 1, FIG. 3, and FIG. 4, the fixing plate includes first fixing plates 111 and a second fixing plate 112. A plate surface of each of the first fixing plates 111 is parallel to the engagement surface 15, and a plate surface of the second fixing plate 112 is perpendicular to the engagement surface 15. The plate surface of the first fixing plate 111 is perpendicular to the plate surface of the second fixing plate 112, which can ensure that forces withstood by the copper bar protection structure 10 may be distributed in multiple directions, so that the copper bar protection structure 10 can be fixed more stably. In the actual operating environment, the battery pack is vibrated in different directions, which means that the copper bar protection structure 10 can withstand the acting force in different directions. In the embodiment, two mutually perpendicular fixing plates are designed to ensure that the copper bar protection structure can be more stable when the forces withstood by the copper bar protection structure are distributed in multiple directions.

In an embodiment, as shown in FIG. 1, two first fixing plates 111 are arranged, and the two first fixing plates 111 are symmetrically arranged on two sides of the copper bar accommodating space (the copper bar 20). The two first fixing plates 111 symmetrically distributed on two sides of the copper bar 20 can allow the copper bar protection structure 10 to withstand the forces more uniformly, which can ensure the mounting stability of the copper bar protection structure 10.

In an embodiment, as shown in FIG. 1 and FIG. 4, the copper bar 20 is divided into multiple segments in an extending direction X of the copper bar, and at least one fixing plate is arranged on the upper housing 111 corresponding to each of the segments of the copper bar 20. In the embodiment, due to the need for space connection, the copper bar 20 needs to be bent, which will cause the copper bar 20 to be divided into multiple segments in the extending direction X of the copper bar, and the corresponding upper housing 11 and lower housing 12 are also divided into multiple segments. At least one fixing plate is arranged on the upper housing corresponding to different extended segments of the copper bar 20, which can help fixing and mounting at different extended segments and ensure the uniform distribution of the forces during the mounting. The choice of the fixing plate may be the first fixing plate 111 or the second fixing plate 112. The specific design may be selected according to routing requirements of the copper bar 20.

In another aspect, as shown in FIG. 6, the present disclosure provides a battery pack 100, including multiple battery modules 60, a liquid cooling plate 50, a copper bar 20, and a copper bar protection structure 10. The multiple battery modules 60 are connected through the copper bar 20, the copper bar 20 is wrapped by the copper bar protection structure 10, and the copper bar protection structure 10 is attached to the liquid cooling plate 50. The copper bar 20 in the battery pack 100 of the embodiment is wrapped by the copper bar protection structure 10, so as to avoid direct contact and collision with the liquid cooling plate 50. In addition, the phase change material layer 30 in the copper bar protection structure 10 can absorb heat during operation of the copper bar 10 and transfer the heat to the cooling liquid plate 50, thereby achieving the effect of temperature control.

Moreover, the present disclosure further provides an electric vehicle, including the above battery pack 100. In the electric vehicle in the embodiment, the copper bar 20 of the battery pack 100 of the electric vehicle is wrapped by the copper bar protection structure 10, which improves the mounting stability of the copper bar 20, avoids risks such as electric leakage of the copper bar 20, and enhances the safety performance of the electric vehicle.

The foregoing descriptions are merely a specific implementation of the present disclosure, but are not intended to limit the protection scope of the present disclosure. Any variation or replacement readily figured out by a person skilled in the art within the technical scope disclosed in the present disclosure shall fall within the protection scope of the present disclosure. Therefore, the protection scope of the present disclosure shall be subject to the protection scope of the claims.

## Claims

1. A copper bar protection structure, comprising an upper housing and a lower housing that are engaged with each other, wherein a receiving groove is provided on each of engagement surfaces of the upper housing and the lower housing; the two receiving grooves are combined into a copper bar accommodating space; a phase change material layer is laid on an inner wall of the receiving groove; and the copper bar is wrapped by the phase change material layer when the copper bar accommodating space accommodates a copper bar.

2. The copper bar protection structure according to claim 1, wherein a thickness of the phase change material layer ranges from 1 mm to 2 mm.

3. The copper bar protection structure according to claim 1 or 2, wherein the upper housing comprises a plurality of fixing plates; fixing through holes are provided on each of the fixing plates; and the fixing through holes are configured for mounting and positioning of the copper bar protection structure.

4. The copper bar protection structure according to claim 3, wherein a metal protective sleeve is arranged in the fixing through hole; and the metal protective sleeve is configured to protect the fixing through hole.

5. The copper bar protection structure according to claim 3 or 4, wherein the fixing plate comprises a first fixing plate and a second fixing plate; a plate surface of the first fixing plate is parallel to the engagement surface; and a plate surface of the second fixing plate is perpendicular to the engagement surface.

6. The copper bar protection structure according to claim 5, wherein two first fixing plates are arranged; and the two first fixing plates are symmetrically arranged on two sides of the copper bar accommodating space.

7. The copper bar protection structure according to any of claims 3 to 5, wherein the copper bar is divided into a plurality of segments in an extending direction of the copper bar; and at least one fixing plate is arranged on the upper housing corresponding to each of the segments of the copper bar.

8. The copper bar protection structure according to any of claims 1 to 7, wherein when the first housing and the second housing are engaged as a whole, a cross-section perpendicular to the engagement surface is a rectangle.

9. A battery pack, comprising a plurality of battery modules, a liquid cooling plate, a copper bar, and the copper bar protection structure according to any of claims 1 to 8, wherein the plurality of battery packs are connected through the copper bar; the copper bar is wrapped by the copper bar protection structure; and the copper bar protection structure is attached to the liquid cooling plate.

10. An electric vehicle, comprising the battery pack according to claim 9.
